Europäisches Patentamt

European Patent Office

Office européen des brevets

(11) Veröffentlichungsnummer: **0 236 462**
**B1**

(12) **EUROPÄISCHE PATENTSCHRIFT**

(45) Veröffentlichungstag der Patentschrift: **06.06.90**

(51) Int. Cl.⁵: **B 23 Q 27/00**

(21) Anmeldenummer: **86905775.2**

(22) Anmeldetag: **11.09.86**

(86) Internationale Anmeldenummer:
**PCT/EP86/00523**

(87) Internationale Veröffentlichungsnummer:
**WO 87/01640 26.03.87 Gazette 87/07**

(54) **VORRICHTUNG ZUM HERSTELLEN VON WERKSTUECKEN MIT POLYGONALER AUSSEN- UND/ODER INNENKONTUR.**

(30) Priorität: **12.09.85 DE 3532558**

(43) Veröffentlichungstag der Anmeldung:
**16.09.87 Patentblatt 87/38**

(45) Bekanntmachung des Hinweises auf die Patenterteilung:
**06.06.90 Patentblatt 90/23**

(84) Benannte Vertragsstaaten:
**AT BE CH DE FR GB IT LI LU NL SE**

(56) Entgegenhaltungen:
**WO-A-85/00545**
**WO-A-85/05587**
**FR-A- 990 709**
**GB-A-1 531 111**
**US-A-2 151 483**
**US-A-2 759 306**

(73) Patentinhaber: **Ley, Hans**
**Dr. Wirtz-Strasse 30**
**D-5203 Much (DE)**

(72) Erfinder: **Ley, Hans**
**Dr. Wirtz-Strasse 30**
**D-5203 Much (DE)**

(74) Vertreter: **Maxton, Alfred et al**
**Goltsteinstrasse 93 Postfach 51 08 06**
**D-5000 Köln 51 (DE)**

Courier Press, Leamington Spa, England.

**Beschreibung**

Die Erfindung betrifft eine Vorrichtung zum Herstellen von Werkstücken mit polygonaler Außen- und/oder Innenkontur, mit einer drehbar gelagerten, angetriebenen Werkstückaufnahme und einem Werkzeugträger, der in einem Lager dreh- und antreibbar gehalten ist, das auf einem seinerseits angetriebenen, in einem Gestell gelagerten Rotor angeordnet ist, der mit Mitteln zur Einstellung des Abstandes zwischen Werkzeugträgerdrehachse und Trägerrotordrehachse versehen ist, wobei die Werkzeugträgerdrehachse mit Abstand parallel zur Trägerrotordrehachse verläuft und wobei der Werkzeugträger und der Trägerrotor über einen Antrieb in Abhängigkeit von der Drehzahl dr Werkstückaufnahme antreibbar sind.

Aus WO-85/00545 ist eine Vorrichtung der vorstehend bezeichneten Art bekannt, die es ermöglicht, für das Werkzeug Bahnkurven vorzugeben, die in etwa in der Größenordnung des Durchmessers des zu erzeugenden Polygonprofils liegen, so daß sich grundsätzlich günstige Eingriffswinkel für das Werkzeug ergeben, was insbesondere bei einer spanabhebenden Bearbeitung von Bedeutung ist. Entscheidend ist hierbei, daß durch die besondere Form der Getriebe hinsichtlich der Form der Bahnkurve vielfältige Variationsmöglichkeiten gegeben sind. Beispielsweise durch die Vorgabe von Epizykloiden, insbesondere von Pascalschen Kurven, lassen sich auch hier Polygonprofile mit unterschiedlichster Kontur herstellen, wie dies in der angegebenen Druckschrift beschrieben ist. Für die Durchführung des in der genannten Druckschrift aufgezeichneten Verfahrens zur Herstellung von Polygonprofilen bekannten Vorrichtungen sind in ihrem Aufbau insbesondere in bezug auf die Erzeugung der Bahnkurve des Werkzeugs durch Überlagerung mehrerer Kreisbewegungen verhältnismäßig kompliziert. Hierdurch sind gewisse Grenzen hinsichtlich der höchstzulässigen Drehzahlen gegeben. Trotz dieser gewissen Beschränkung besitzt diese Vorrichtung den Vorteil, daß durch die in weiten Bereichen mögliche Einstellbarkeit der Drehachse von Werkstückträgerrotor und Werkzeugträger in Verbindung mit einer entsprechenden Vorgabe der Drehzahlverhältnisse praktische beliebige Polygonprofile herstellbar sind.

Aus der FR—A—990 709 ist ferner eine Vorrichtung zur Herstellung von Bohrungen mit fest vorgegebener Polygonkontur bekannt, bei der zwar die Übertragung der Drehbewegung auf den Trägerrotor und den Werkzeugträger in Form eines auf den Trägerrotor gelagerten Planetenradgetriebes erfolgt, was zwangsläufig zur Folge hat, daß jegliche Einstellmöglichkeit fehlt, die Änderungen hinsichtlich der Polygonkontur ermöglicht. Es ist immer nur eine durch den Achsabstand von Trägerrotor und Werkzeugträger sowie das feste Übersetzungsverhältnis vorgebene Polygonkontur herstellbar.

Der Erfindung liegt die Aufgabe zugrunde, eine Vorrichtung der eingangs bezeichneten Art hinsichtlich Antrieb und Einstellbarkeit so zu verbessern, daß eine kompakte Bauweise erreicht wird.

Diese Aufgabe wird erfindungsgemäß dadurch gelöst, daß der Antrieb für den Werkzeugträger auf dem Trägerrotor gelagert ist und daß die Mittel zur Einstellung des Abstandes der Drehachsen zueinander durch eine im Trägerrotor exzentrisch zur Trägerrotordrehachse gelagerte und über Stellmittel relativ hierzu verdreh- und feststellbare Exzenterscheibe gebildet wird, an der das Lager des Werkzeugträgers befestigt ist. Durch diese Anordnung ist es möglich, eine sehr steife Konstruktion zu schaffen und durch eine Reduzierung der Bauteile zu einer sehr kompakten Baueinheit zu kommen, wobei durch die Lagerung des Antriebs für den Werkzeugträger auf dem Trägerrotor selbst, d.h. also einer Anordnung, bei der der Antrieb mit dem Trägerrotor umläuft, sich eine exakt auswuchtbares System ergibt. Die vorgeschlagene Verstellmöglichkeit der Drehachsen zueinander hat gegenüber einer einfachen Feststellung mittels radial verschiebbarer Gleitsteine den Vorteil einer sehr viel höheren Eigensteifigkeit bei gleichzeitiger Gewichtseinsparung. Darüber hinaus ist die Aufnahme der beim Betrieb auftretenden Flieh- und Reaktionskräfte sehr viel besser, die darüber hinaus nicht auf die Einstell- und Feststellmittel wirksam werden können. Die Anordnung ist zweckmäßigerweise so vorgesehen, daß das Lager für den Werkzeugträger exzentrisch zur Exzenterscheibe mit dieser verbunden ist, so daß durch Verdrehen der Exzenterscheibe der Werkzeugträgerdrehachse aus einer Grundeinstellung, in der sie mit der Trägerrotordrehachse zusammenfällt, bis auf den maximal vorgegebenen Abstand der Drehachsen zueinander einstellbar ist. Hierdurch ist es möglich, die erfindungsgemäße Vorrichtung in ihrer Grundeinstellung so einzustellen, daß sie auch wie eine einfache Dreh- oder Fräseinrichtung Werkstücke mit Kreisquerschnitt herzustellen vermag. Die erzielbare Formsteifigkeit und die gute Auswuchtung des Systems bewirken, daß sich Oberflächen mit hoher Güte und bester Paßgenauigkeit herstellen lassen. Auch bei der erfindungsgemäßen Ausbildung der Einrichtung zur Einstellung des Abstandes der Drehachsen zueinander bleibt der Vorteil der vorbekannten Ausführungsform erhalten, daß sowohl der Trägerrotor als auch der Werkzeugträger hohl ausgebildet werden können, so daß auch Werkstücke mit großer Länge, insbesondere Stangenmaterial bearbeitet werden können.

In einer bevorzugten Ausgestaltung der Erfindung ist vorgesehen, daß als Stellmittel die Exzenterscheibe mit einem Schneckenrad verbunden ist, das im Eingriff mit einer im Trägerrotor gelagerten Stellschnecke steht. Diese Ausbildung des Stellmittels ist selbsthemmend und läßt sich darüber hinaus auch spielfrei ausbilden, so daß eine sehr genaue Einstellung des für die jeweilige Form des zu erzeugenden Polygons wichtigen Abstandes der beiden Drehachsen zueinander möglich ist.

In einer bevorzugten Ausgestaltung der Erfindung ist ferner vorgesehen, daß der mit dem Trägerrotor verbundene Antrieb des Werkzeugträgers durch ein Planetengetriebe gebildet wird, dessen Planetenrad als Doppelrad ausgebildet und in einem als Planetenträger ausgebildeten Teil des Trägerrotors gelagert ist, wobei ein Teilrad auf einem mit dem Gestell fest verbundenen Zentralrad abrollt und das andere Teilrad mit einem Antriebsrad des Werkzeugträgers im Eingriff steht, und daß der Planetenträger in Abhängigkeit von der Verstellung der Exzenterscheibe verstellbar mit dem Trägerrotor verbunden ist. Hierdurch wird es möglich, den angetriebenen Trägerrotor seinerseits als Antrieb für den Werkzeugträger zu benutzen, wobei die zur Erzeugung von Polygonprofilen erforderlichen Drehrichtungen der einzelnen Elemente zueinander und/oder die erforderliche Drehzahldifferenz zwischen dem Umlauf der Drehachse des Werkzeugträgers um das Werkstück einerseits und der Drehzahl des Werkzeugträgers um seine Drehachse selbst durch die Übersetzungsverhältnisse zwischen dem einen Teilrad des Planetenrades und dem Zentralrad einerseits und dem anderen Teilrad und dem Antriebsrad des Werkzeugträgers andererseits in einfacher Weise vorgegeben werden kann, wobei der notwendige Zwanglauf zwischen Trägerrotor und Werkzeugträger in einfacher Weise realisierbar ist.

In einer anderen Ausgestaltung der Erfindung ist vorgesehen, daß der mit dem Trägerrotor verbundene Antrieb des Werkzeugträgers durch einen Elektromotor gebildet ist, dessen Stator mit dem Trägerrotor verbunden ist und dessen Rotor mit dem Werkzeugträger verbunden ist. Diese Anordnung setzt lediglich voraus, daß mit elektrischen Mitteln der drehzahlmäßige Zwanglauf zwischen dem Trägerrotor einerseits und dem Werkzeuträger andererseits bewirkt werden muß.

Die Erfindung wird anhand schematischer Zeichnungen näher erläutert. Es zeigen:

Fig. 1 die Lage von Umkreis und Inkreis einer zu erzeugenden Polygonkontur sowie die Lage der Werkzeugbahn hierzu, wie sie sich für eine Schleifbearbeitung ergibt,

Fig. 2 die Lage von Umkreis und Inkreis einer zu erzeugenden Polygonkontur sowie die Lage der Werkzeugbahn hierzu, wie sie sich insbesondere für die Drehbearbeitung ergibt,

Fig. 3 einen schematischen Längsschnitt durch eine Vorrichtung zur Drehbearbeitung,

Fig. 4 eine Stirnansicht auf den Trägerrotor in Grundeinstellung,

Fig. 5 eine Stirnansicht auf den Trägerrotor gemäß Fig. 4 in Betriebseinstellung,

Fig. 6 eine Anordnung mit einem Elektromotor als Antrieb für den Werkzeugträger,

Fig. 7 eine Ausgestaltung der Vorrichtung für die Schleifbearbeitung.

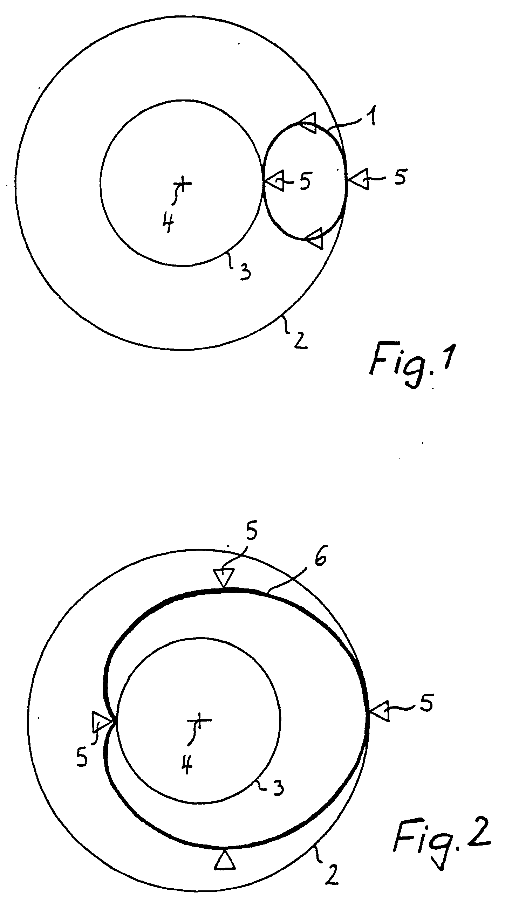

In Fig. 1 ist schematisch die Zuordnung der Werkzeugbahn 1 zum Umkreis 2 und zum Inkreis 3 eines zu erzeugenden Polygonprofils dargestellt. Die Form der zu erzeugenden Polygonkontur ist in diesem Zusammenhang ohne Bedeutung, da hier nur die Lage der Werkzeugbahn zu erläutern ist.

Bei dem dargestellten Beispiel wird das Werkzeug auf einer Ellipsenbahn geführt, die den Umkreis 2 und den Inkreis 3 berührt, so daß also das Werkzeug 5, hier symbolisch durch eine Spitze dargestellt, im wesentlichen translatorisch so geführt wird, daß das Werkzeug während des Umlaufs auf der Werkzeugbahn 1 in etwa gegen die Drehachse 4 des Werkstücks gerichtet bleibt und so, mit dem Werkstück im Eingriff ist. Die Werkstückdrehachse ist zugleich die Mittelachse des zu erzeugenden Polygonprofils. Diese Form der Werkzeugbahn wird insbesondere für die Schleifbearbeitung oder Fräsbearbeitung angewendet, wobei keine translatorische Werkzeugführung notwendig ist.

In Fig. 2 ist die Form einer Werkzeugbahn dargestellt, wie sie insbesondere bei der Drehbearbeitung verwendet wird. Die Führung des Werkzeugs ist hierbei so ausgelegt, daß das Werkzeug 5 auf einer Werkzeugbahn 6 umläuft, die dem Umkreis 2 tangiert, jedoch den Inkreis 3 einschließlich der Werkstückdrehachse 4 umfaßt und tangiert, so daß sich letztlich eine Werkzeugbahn ergibt, deren "Durchmesser" erheblich größer ist als dies bei dem bisherigen Verfahren möglich war. Die Bahnkurve 6 ist hierbei entweder eine Epizykloide, insbesondere eine Pascalsche Kurve, wie dargestellt, oder eine Hypozykloide, insbesondere eine Ellipse. Die dargestellte Pascalsche Kurve ist aus Gründen der zeichnerischen Darstellung etwas verzerrt dargestellt. In der Praxis ist die Kurve nicht so stark ausgeprägt. Bei der dargestellten Bahnkurve 6 ergibt sich bei entsprechendem Drehzahlverhältnis zwischen Drehzahl des Werkstücks einerseits und der Drehzahl des Werkzeugs andererseits ein dreieckiges Polygonprofil mit eingezogenen Flanken. Wird die Vorrichtung so eingestellt, daß die Bahnkurve 6 um 180° gedreht dem Umkreis 2 zugeordnet ist, dann ergibt sich bei entsprechendem Drehzahlverhältnis eine "dreieckige" Polygonkontur mit im wesentlichen scharf ausgezogenen Ecken und geraden Flanken.

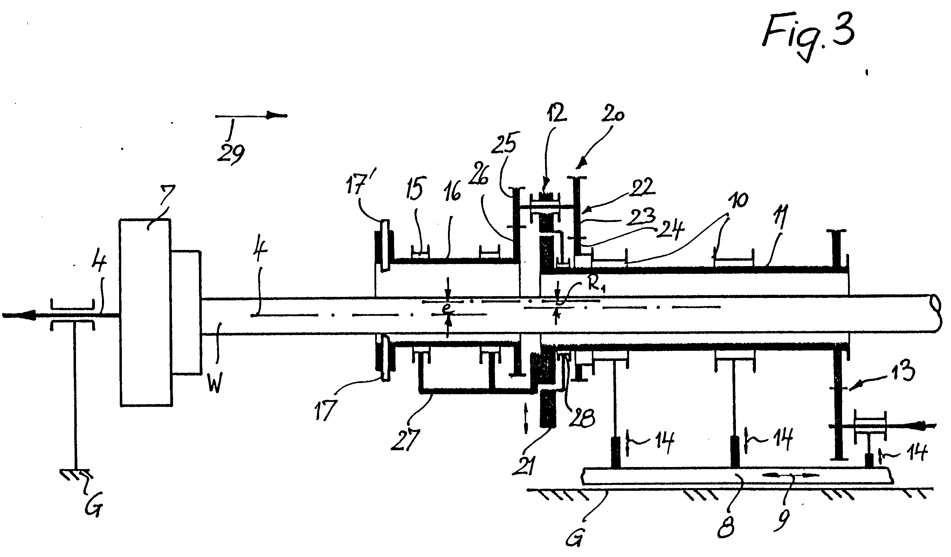

Zur Erzeugung der vom Werkzeug zu durchlaufenden Bahnkurve 6, wie anhand von Fig. 2 prinzipiell dargestellt, wird in Fig. 3 schematisch eine entsprechende Vorrichtung gezeigt. Die Vorrichtung weist ein Spannfutter 7 für das zu bearbeitende Werkstück W auf, das hier beispielsweise als Stangenmaterial dargestellt ist. Das Spannfutter 7 wird von einem hier nicht näher dargestellten Antrieb um die Werkstückdrehachse 4 mit einer vorgebbaren, konstanten Winkelgeschwindigkeit gedreht. Dem Spannfutter 7 ist ähnlich wie bei einer Drehbank ein supportähnliches Gestell 8 zugeordnet, das gegenüber dem hier nicht näher dargestellten Maschinengestell G, in dem die Drehachse 4 gelagert ist, in Richtung des Pfeiles 9 gegen das Spannfutter 7 verschiebbar gelagert ist. Auf diesem Gestell 8 ist eine Lagerung 10 angeordnet, in der die hohl ausgebildete Welle 11 eines Trägerrotors 12 gelagert ist. Die Hohlwelle 11 steht über ein Vorgelege 13 mit einem hier nicht näher dargestellten Getriebe mit dem Antrieb des Spannfutters 7 in Verbindung, so daß die Drehzahl der
Welle 11 abhängig ist von der Drehzahl des
Spannfutters 7. Das Lager 10 einschließlich des
Vorgeleges 13 ist mit Verstelleinrichtungen 14 am
Gestell 8 gehalten, so daß die Welle 11 mit ihrem
Trägerrotor 12 quer zur Drehachse 4 des Spannfutters 7 verschoben werden kann.

Am Trägerrotor 12 ist ein Lager 15 angeordnet,
in dem der ebenfalls hohl ausgebildete Werkzeugträger 16 relativ zum Trägerrotor drehbar gelagert
ist. An dem dem Spannfutter 7 zugekehrten Ende
des Werkzeugträgers 16 ist wenigstens ein Werkzeug 17 in einer üblichen Spannvorrichtung befestigt. Bei dem dargestellten Ausführungsbeispiel
ist auf der gegenüberliegenden Seite ein zweites
Werkzeug 17' eingespannt, so daß bei genormten
Polygonkonturen, beispielsweise das Polygonprofil P3G, die beiden Werkzeuge gleichzeitig mit
konstantem Eingriffswinkel am Werkstück eingreifen.

Bei einer vorgegebenen Polygonkontur ist hierbei der Werkzeugträger 16 so eingestellt, daß
seine Drehachse 18 um das Maß e zur Werkstückdrehachse 4 versetzt angeordnet ist und zusätzlich um das Maß R1 zur Drehachse 19 des Trägerrotors versetzt ist. Bei Drehung des Trägerrotors
12 wird somit die Drehachse 18 des Werkzeugträgers 16 auf einer Kreisbahn um die Drehachse 19
des Trägerrotors geführt. Wird nun der Werkzeugträger zusätzlich relativ zum Trägerrotor um seine
Drehachse 18 drehend angetrieben, wobei
sowohl die Drehzahl des Trägerrotors als auch die
Drehzahl des Werkzeugträgers in Abhängigkeit
von der Drehzahl des Werkstücks W ausgelegt ist,
so beschreibt entsprechend den vorgegebenen
Abständen e und R1 der betreffenden Drehachsen
zueinander und den vorgegebenen Zwangläufigen Drehzahlverhältnissen die auf das Werkstück
einwirkende Spitze des Werkzeuges infolge der
Überlagerung aller Drehbewegungen eine Bahn,
die der gewünschten Polygonkontur entsprechend den Vorgaben entspricht. Die Werkzeugspitze selbst beschreibt, wie in Fig. 2 angegeben,
eine Pascalsche Kurve, die erst in der Überlagerung mit der Drehbewegung des Werkstücks
selbst zur Polygonkontur führt.

Bei dem in Fig. 3 dargestellten Ausführungsbeispiel erfolgt der Antrieb des Werkzeugträgers 16
über ein Planetengetriebe 20, das im Trägerrotor
12 gelagert ist. Hierzu ist ein Teil 21 des Trägerrotors als Planetenträger ausgebildet, in dem das
als Doppelrad ausgebildete Planetenrad 22 gelagert ist. Das Teilrad 23 des Planetenrades 22 rollt
hierbei auf einem mit dem Gestell 10 fest verbundenen Zentralrad 24 ab. Das andere Teilrad 25
steht im Eingriff mit einem Antriebsrad 26, des
fest mit dem Werkzeugträger 16 verbunden ist.
Wird nun der Trägerrotor 12 über den Antrieb und
das Vorgelege 13 in Drehung versetzt, so
beschreibt nicht nur die Drehachse 18 des Werkzeugträgers 16 eine Kreisbahn um die Drehachse
19 des Trägerrotors 12, sondern der Werkzeugträger 16 wird zu dem noch um seine Drehachse 18 entsprechend dem durch das Planetengetriebe 20
vorgegebenen Übersetzungsverhältnis in Drehung versetzt.

Die Vorgabe der Drehzahlen von Werkstück,
Werkzeugträger und Trägerrotor bestimmt die
"Eckenzahl" des herzustellenden Polygonprofils.

Legt man für den Werkzeugträger die Absolutdrehzahl, also die Drehzahl bezogen auf einen
raumfesten Betrachter zugrunde, so ergeben sich
folgende Drehzahlverhältnisse Werkstück:Werk-
zeugträger:

> Dreieck=2:3
> Viereck=3:4
> Fünfeck=4:5
> Sechseck=5:6.

Die Kontur der Flanken wird dagegen durch die
Abstände der einzelnen Drehachsen zueinander
bestimmt. Aus diesem Grunde ist zusätzlich zu
der Verstellbarkeit der Hohlwelle 11 quer zur
Werkstückdrehachse 4 auch noch der Abstand
zwischen der Trägerrotorachse 19 und der Werkzeugträgerachse 18 einstellbar. Bei dem dargestellten Ausführungsbeispiel erfolgt das in der
Weise, daß das Lager 15 mit einem Lagerträger 27
verbunden ist, der seinerseits auf dem Trägerrotor 12 an einer Exzenterscheibe befestigt ist, die
nachstehend noch näher beschrieben wird. Durch
Verdrehen der Exzenterscheibe im Trägerrotor 12
kann dann der Abstand zwischen der Werkzeugträgerachse 18 und der Trägerrotorachse 19 eingestellt werden, und zwar von einer Grundstellung ausgehend, bei der beide Achsen zusammenfallenis zu einem Maximalabstand.

Damit nun das Teilrad 25 des Planetenrades 22
weiterhin im Eingriff mit dem Antriebsrad 26 des
Werkzeugträgers 16 bleibt, ist der Planetenträger
21 schwenkbar mit dem Trägerrotor bzw. der
Hohlwelle 11 verbunden, so daß nach dem Einstellen des Abstandes zwischen Werkzeugträgerachse 18 und Rotorträgerachse 19 durch Verschwenken das Teilrad 25 mit dem Antriebsrad 26
in eingriff gebracht und dann festgelegt werden
kann. Dies ist schematisch durch das Schwenklager 28 gekennzeichnet.

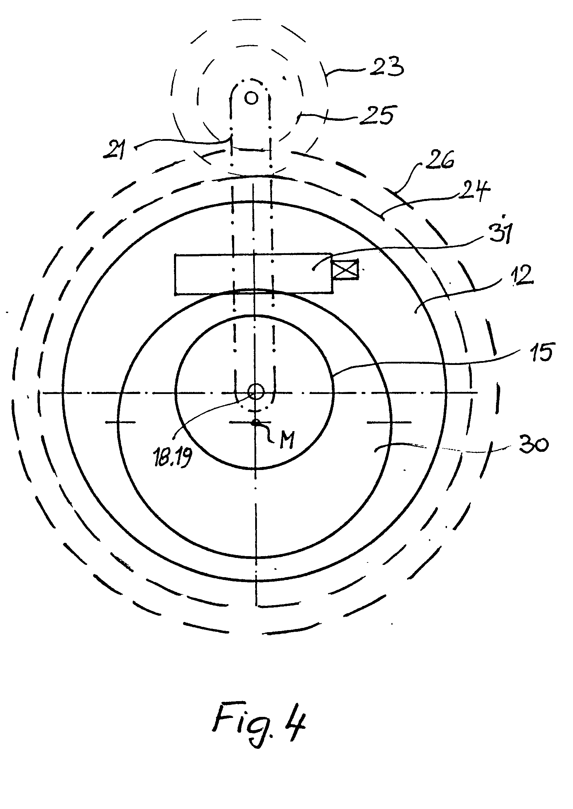

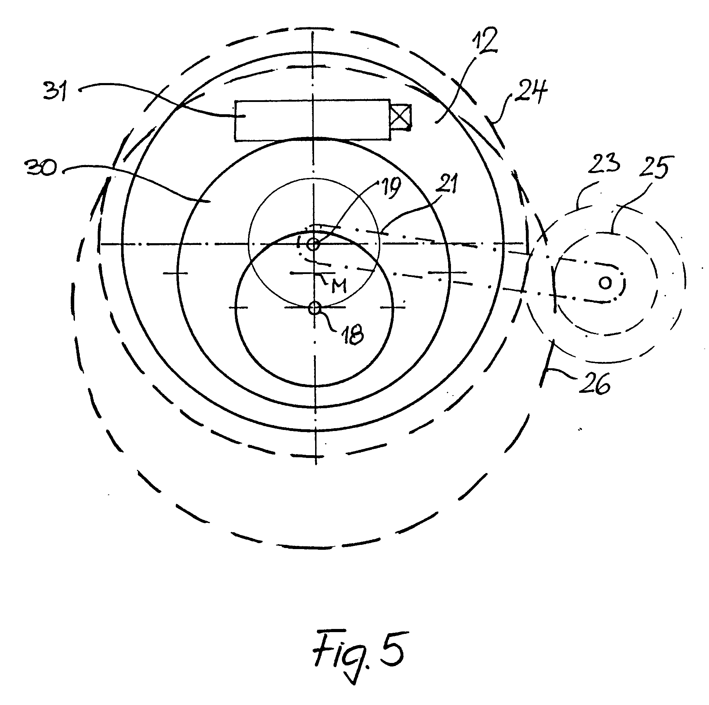

Der vorstehend beschriebene Verstellvorgang
ist anhand der Fig. 4 und 5 näher beschrieben. In
den Zeichnungen ist eine Stirnansicht des Rotorträgers in Richtung des Pfeiles 29 in Fig. 3 dargestellt. Die Bauelemente sind jedoch hier nur durch
ausgezogene Kreise gekennzeichnet, wobei der
Kreis 12 den Rotorträger darstellt, der Kreis 30 die
vorstehend angegebene Exzenterscheibe, mit der
das durch den Kreis 15 gekennzeichnete Lager 15
für den Werkzeugträger 16 befestigt ist. Die
Zuordnung des Lagers 15 auf der Exzenterscheibe
30 zum Werkzeugträger 12 ist nun so vorgesehen,
daß in der Grundeinstellung beide Drehachsen 18
und 19 zusammenfallen. Wird dann die Exzenterscheibe 30 um ihren Mittelpunkt M relativ zum
Trägerrotor 12 verdreht, so kann die Werkzeugträgerachse 18 bis maximal auf den in Fig. 5 dargestellten Abstand zur Trägerrotorachse 19
gebracht werden.

Die zugehörigen Zahnräder des Planetenantriebs sind bei dem dargestellten Beispiel durch unterbrochene Linien dargestellt und entsprechend mit den zugehörigen Bezugszeichen gem. Fig. 3 versehen. Wie die Stirnansicht erkennen läßt, rollt auf dem feststehenden Zentralrad 24 das Teilrad 23 und auf dem Antriebsrad 26 des Werkzeugträgers das mit dem Teilrad 23 starr verbundene Teilrad 25 ab. Der Planetenträger 21 ist wegen der übersichtlicheren Darstellung mit einer strichpunktierten Linie als einfacher Arm sichtbar gemacht, um die Veränderung der Stellung der Planetenräder in Abhängigkeit von der Veränderung des Abstandes zwischen den Drehachsen 18 und 19 in Fig. 5 zu kennzeichnen.

Die Exzenterscheibe 30 ist auf ihrem Umfang mit einer Schneckenverzahnung versehen, in die eine Schneckenspindel 31 eingreift, die im Trägerrotor 12 gelagert ist, so daß durch Verdrehen der Schneckenspindel 31 die Exzenterscheibe 30 im Trägerrotor 12 verdreht werden kann. Das Schneckengetriebe ist so ausgebildet, daß es selbstsperrend ist und spielfrei ist.

Wird nun mit Hilfe der Schneckenspindel 31 die Drehachse 18 in Abstand zur Drehachse 19 gebracht, so ändert sich auch die Lage des Antriebsrades 26, dessen Drehachse die Achse 18 ist. Da der Planetenträger 21 über sein Lager 28 um die Trägerrotorachse 19 schwenkbar gelagert ist, kann nun das Planetenrad 22 entsprechend nachgeführt werden.

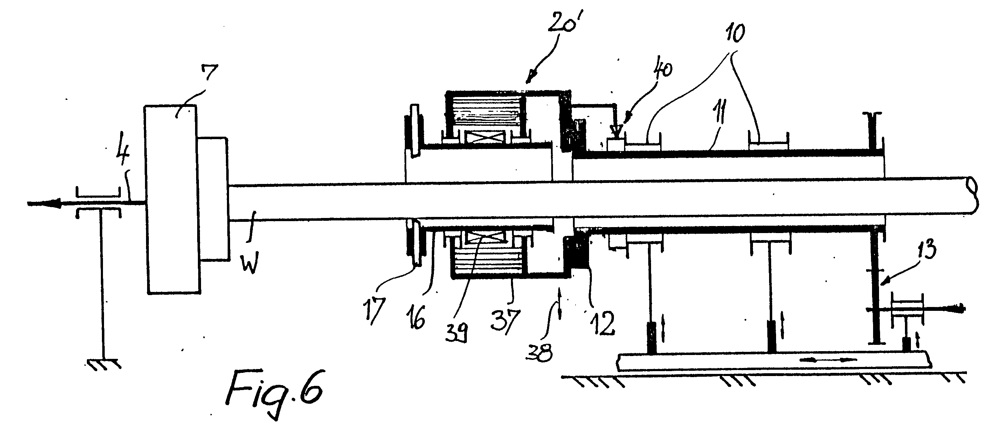

In Fig. 6 ist eine Ausführungsform der Vorrichtung gezeigt, bei der statt eines Planetengetriebes für den Antrieb des Werkzeugträgers 16 ein Elektromotor 20' vorgesehen ist. Der Stator 37 des Elektromotors ist hierbei auf dem Trägerrotor 12 befestigt und zwar so, daß er hinsichtlich der Drehachse des ihm zugeordneten Rotors gegenüber der Drehachse der Welle 11 des Trägerrotors verschoben werden kann. Dies ist durch den Doppelpfeil 38 angedeutet. Auch hier erfolgt die Verstellung der Drehachsen zueinander über eine Exzenterscheibe, wie dies vorstehend beschrieben ist.

Der Werkzeugträger 16 ist im Stator 37 drehbar gelagert und gleichzeitig als Anker eines Elektromotors ausgebildet, was durch die "Wicklung" 39 angedeutet ist. Die Stromversorgung des Motors erfolgt über eine schematisch dargestellte Schleifringübertragungseinrichtung 40. Durch eine entsprechende Steuerung ist sichergestellt, daß die für das jeweils herzustellende Profil erforderlichen Drehzahlverhältnisse zwischen Werkstück, Trägerrotor und Werkzeugträger eingehalten werden. Hierbei kann die Zwangläufigkeit zwischen Werkstück und Trägerrotor nicht nur mechanisch über ein Getriebe erfolgen, wie vorstehend angegeben, sondern ebenfalls auch über elektrische Mittel, so daß auch das Vorgelege 13 durch einen eigenen Elektromotor angetrieben werden kann. Im übrigen entspricht der Aufbau und die Arbeitsweise der Ausführungsform gem. Fig. 3.

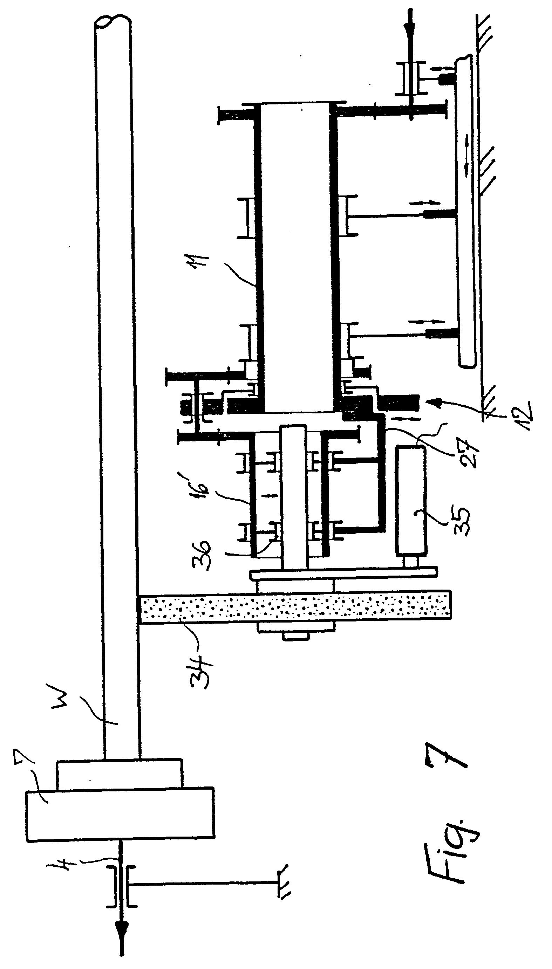

In Fig. 7 ist das Ausführungsbeispiel gem. Fig. 3 in einer umgerüsteten Form dargestellt, wie sie zum Schleifen, aber auch zum Fräsen eingesetzt werden kann. Hierbei ist anstelle von Drehmeisseln im Werkzeugträger 16' eine Schleifscheibe 34 gelagert, der auf dem Lagerträger 27 des Trägerrotors 12 ein Antriebsmotor 35 zugeordnet ist. Die Lagerung 36 für die Schleifscheibe 34 ist hierbei im Werkzeugträger 16' so ausgebildet, daß sie in einer Ebene quer zur Drehachse einstellbar verschiebbar ist, um eine Zustellung der Schleifscheibe zu ermöglichen. Die Stromversorgung des Antriebsmotors 35 erfolgt beispielsweise über Schleifringe. Im übrigen entspricht der Aufbau und die Funktion der Vorrichtung 8 dem anhand von Fig. 3 beschriebenen Ausführungsbeispiel. Anstelle einer Schleifscheibe kann mit dem Werkzeugträger 16' auch eine Fräswerkzeug verbunden sein.

Anstelle einer Schleifscheibe kann bei dieser Anordnung auch ein sogenannter Messerkopf mit wenigstens einem Messer eingesetzt werden. Die Drehzahl des Messerkopfes muß dann allerdings zwangsläufig zur Werkzeugdrehzahl gesteuert sein. Die Messer des Messerkopfes sind diskontinuerlich im Eingriff, so daß sich auch extreme Konturprofile erzeugen lassen.

**Patentansprüche**

1. Vorrichtung zur Herstellung von Werkstücken mit polygonaler Außen- und/oder Innenkontur, mit einer drehbar gelagerten, angetriebenen Werkstückaufnahme (7) und einem Werkzeugträger (16), der in einem Lager (15) dreh- und antreibbar gehalten ist, das auf einem seinerseits angetriebenen, im einem Gestell (8) gelagerten Trägerrotor (12) angeordnet ist, der mit Mitteln zur Einstellung des Abstandes zwischen Werkzeugträgerdrehachse (18) und Trägerrotordrehachse (19) versehen ist, wobei die Werkzeugträgerdrehachse (18) mit Abstand parallel zur Trägerrotordrehachse (19) verläuft und wobei der Werkzeugträger (16) und der Trägerrotor (12) über einen Antrieb in Abhängigkeit von der Drehzahl der Werkstückaufnahme (7) antreibbar sind, dadurch gekennzeichnet, daß der Antrieb (20; 20') für den Werkzeugträger (16) auf dem Trägerrotor (12) gelagert ist und daß die Mittel auf Einstellung des Abstandes der Drehachsen (18, 19) zueinander durch eine im Trägerrotor (12) exzentrisch zur Trägerrotordreachse (19) gelagerte und über Stellmittel (31) relativ hierzu verdreh- und feststellbare Exzenterscheibe (30) gebildet wird, an der das Lager (15) des Werkzeugträgers (16) befestigt ist.

2. Vorrichtung nach Anspruch 1, dadurch gekennzeichnet, daß das Lager (15) für den Werkzeugträger (16) exzentrisch zur Exzenterscheibe (30) mit dieser so verbunden ist, daß durch Verdrehen der Exzenterscheibe (30) die Werkzeugträgerdrehachse (18) aus einer Grundeinstellung, in der sie mit der Trägerrotordrehachse (19) zusammenfällt, bis auf den maximalen Abstand der Drehachsen (18, 19) zueinander einstellbar ist.

3. Vorrichtung nach Anspruch 1 oder 2, dadurch gekennzeichnet, daß als Stellmittel die Exzenterscheibe (30) mit einem Schneckenrad verbunden ist, daß im Eingriff mit einer im Trägerrotor (12) gelagerten Stellschnecke (31) steht.

4. Vorrichtung nach einem der Ansprüche 1 bis 3, dadurch gekennzeichnet, daß der mit dem Trägerrotor (12) verbundene Antrieb des Werkzeugträgers (16) durch ein Planetengetriebe (20) gebildet wird, dessen Planetenrad (22) als Doppelrad (23, 25) ausgebildet und in einem als Planetenträger (21) ausgebildeten Teil des Trägerrotors (12) gelagert ist, wobei ein Teilrad (23) auf einem mit dem Gestell (8) fest verbundenen Zentralrad (24) abrollt und das andere Teilrad (25) mit einem Antriebsrad (26) des Werkzeugträgers (16) in Eingriff steht.

5. Vorrichtung nach Anspruch 4, dadurch gekennzeichnet, daß der Planetenträger (21) in Abhängigkeit von der Verstellung der Exzenterscheibe (30) verstellbar mit dem Trägerrotor (12) verbunden ist.

6. Vorrichtung nach einem der Ansprüche 1 bis 3, dadurch gekennzeichnet, daß der mit dem Trägerrotor (12) verbundene Antrieb des Werkzeugträgers durch einen Elektromotor gebildet wird, dessen Stator mit dem Trägerrotor verbunden ist und dessen Rotor mit dem Werkzeugträger verbunden ist.

## Revendications

1. Dispositif de fabrication de pièces à profil extérieur et/ou intérieur polygonal, comportant, pour la pièce, un mandrin (7), entraîné et monté en rotation, ainsi qu'un porte-outil (16) monté, en entraînement et en rotation, dans un palier (15) disposé sur un rotor support (12) qui est entraîné de son côté, qui porte sur un traînard (8) et qui est équipé de moyens permettant de régler la distance entre l'axe de rotation (18) du porte-outil et l'axe de rotation (19) du rotor support, l'axe de rotation (18) du porte-outil étant dirigé parallèlement à l'axe de rotation (19) du rotor support et à une certaine distance de cet axe et le porte-outil (16) et le rotor support (12) pouvant être entraînés par l'intermédiaire d'un mécanisme d'entraînement, en fonction de la vitesse de rotation du mandrin (7), caractérisé en ce que le mécanisme d'entraînement (20, 20') du porte-outil (16) est porté par le rotor support (12); et en ce que le moyen permettant de régler la distance des axes de rotation (18, 19) l'un par rapport à l'autre est formé par un disque excentré (30) qui est porté, par le rotor support (12), excentriquement par rapport à l'axe de rotation (19) du rotor support, dont la position peut être modifiée par un moyen de positionnement (31) lui donnant une rotation relative puis le bloquant et auquel est fixé le palier (15) du porte-outil (16).

2. Dispositif selon la revendication 1, caractérisé en ce que le palier (15) du porte-outil (16) est lié au disque excentré (30), et de façon excentrique par rapport à celui-ci, de façon telle qu'en faisant tourner le disque excentré (30), on puisse régler l'axe de rotation (18) du porte-outil, depuis une position de base, dans laquelle il coïncide avec l'axe de rotation (19) du rotor support, jusqu'à la distance maximale des axes de rotation (18, 19) l'un par rapport à l'autre.

3. Dispositif selon la revendication 1 ou la revendication 2, caractérisé en ce que, comme moyen de positionnement, l'axe excentré (30) est lié à une roue à vis sans fin qui engrène avec une vis sans fin de positionnement (31) portée sur le rotor support (12).

4. Dispositif selon l'une des revendications 1 à 3, caractérisé en ce que le mécanisme d'entraînement, lié au rotor support (12), du porte-outil (16) est formé par un mécanisme à planétaire (20) dont le planétaire (22) est conçu comme pignon double (23, 25) et est porté dans une partie du rotor support (12) conçue comme porte-satellites (21), étant précisé qu'un pignon partiel roule, en engrenant, sur un pignon central (24) solidarisé avec le traînard (8) et que l'autre pignon partiel (25) engrène avec un pignon d'entraînement (26) du porte-outil (16).

5. Dispositif selon la revendication 4, caractérisé en ce que le porte-satellites (21) est lié au rotor support (12) avec possibilité de réglage en fonction de la position du disque excentré (30).

6. Dispositif selon l'une des revendications 1 à 3, caractérisé en ce que le mécanisme d'entraînement, lié au rotor support (12), du porte-outil (16) est formé par un moteur électrique dont le stator est lié au rotor support (12) et dont le rotor est lié au porte-outil (16).

## Claims

1. Device for manufacturing workpieces with a polygonal external and/or internal profile, comprising a rotatably mounted driven workpiece holder (7) and a tool carrier (16) which is mounted rotatably in a bearing (15) so that it can be driven, the bearing being arranged on a support rotor (12) mounted in a base (8) and itself being driven, which rotor is provided with means for adjusting the distance between the axis of rotation (18) of the tool carrier and the axis of rotation (19) of the support rotor, with the axis of rotation (18) of the tool carrier running at a distance from and parallel to the axis of rotation (19) of the support rotor and with the tool carrier (16) and the support rotor (12) being drivable via a drive, dependent on the speed of rotation of the workpiece holder (7), characterised in that the drive (20; 20') for the tool carrier (16) is mounted on the support rotor (12) and that the means for adjusting the distance of the axes of rotation (18, 19) from each other is formed by an eccentric disc (30) which is mounted in the support rotor (12) eccentrically to the axis of rotation (19) of the support rotor and can be rotated and locked relative thereto via positioning means (31), to which disc the bearing (15) of the tool carrier (16) is attached.

2. Device according to Claim 1, characterised in hhat the bearing (15) for the tool carrier (16) is connected to the eccentric disc (30) eccentrically thereto in such a manner that the axis of rotation (18) of the tool carrier can be adjusted from a basic setting in which it coincides with the axis of rotation (19) of the support rotor to the maximum distance between the axes of rotation (18, 19) by rotating the eccentric disc (30).

3. Device according to Claim 1 or 2, characterised in that as a positioning means the eccentric disc (30) is connected to a worm wheel which is engaged with a positioning worm (31) mounted in the support rotor (12).

4. Device according to one of Claims 1 to 3, characterised in that the drive of the tool carrier (16) which is connected to the support rotor (12) is formed by a planet gear (20), the planet wheel (22) of which is constructed as a double wheel (23, 25) and is mounted in a part of the support rotor (12) which is designed as a pinion cage (21), with one wheel (23) rolling on a central wheel (24) rigidly connected to the base (8) and the other wheel (25) being engaged with a drive wheel (26) of the tool carrier (16).

5. Device according to Claim 4, characterised in that the pinion cage (21) is adjustably connected to the support rotor (12) depending on the adjustment of the eccentric disc (30).

6. Device according to one of Claims 1 to 3, characterised in that the drive of the tool carrier which is connected to the support rotor (12) is formed by an electric motor, the stator of which is connected to the support rotor and the rotor of which is connected to the tool carrier.

Fig.1

Fig.2

Fig.3

EP 0 236 462 B1

Fig. 4

Fig. 5

Fig.6

EP 0 236 462 B1

Fig. 7

EP 0 236 462 B1